# NEUE EUROPÄISCHE PATENTSCHRIFT

(11) **EP 1 687 072 B2**
(45) Veröffentlichungstag und Bekanntmachung des Hinweises auf die Entscheidung über den Einspruch: **30.11.2011**
(45) Hinweis auf die Patenterteilung: 14.01.2009
(21) Anmeldenummer: 03767627.7
(22) Anmeldetag: 24.11.2003
(51) Int. Cl.: A63C 9/00, A43B 5/04

(54) **KOMBINATION AUS SKISCHUHEN UND SKI**
SKIS AND SKI BOOTS COMBINATION
COMBINAISON DE CHAUSSURES DE SKI ET DE SKIS

(43) Veröffentlichungstag der Anmeldung: 09.08.2006
(73) Patentinhaber: Tyrolia Technology GmbH, 2320 Schwechat (AT)
(72) Erfinder: BRANDT, Helmut, A-2333 Leopoldsdorf (AT)
(74) Vertreter: Vinazzer, Edith
(86) Internationale Anmeldenummer: PCT/EP2003/013175
(87) Internationale Veröffentlichungsnummer: WO 2005/053802

(56) Entgegenhaltungen:
- WO-A-02/47776
- WO-A-96/13183
- GB-A- 1 214 738
- US-A- 5 273 305
- US-A- 5 881 958
- US-A1- 2002 113 413

## Beschreibung

Die Erfindung betrifft eine Kombination aus Skischuhen verschiedener Größen und aus Ski mit montierten, einen Vorderbacken und einen Fersenbacken aufweisenden Bindungen, wobei die Skischuhe zu mehreren Skischuhtypen gehören, wobei jeder Skischuhtyp eine Sohle einer bestimmten Länge aufweist, die sich von der Sohlenlänge der anderen Skischutypen unterscheidet.

Leihskistationen sind üblicher Weise je nach Bedarf mit einer Anzahl von Ski unterschiedlicher Typen und unterschiedlicher Längen mit vormontierten Skibindungen ausgerüstet. Skischuhe unterschiedlicher Größen vervollständigen das Angebot. Die Skibindungen sind mittels geeigneter Mechanismen derart am Ski angeordnet, dass der gegenseitige Abstand der beiden Bindungsbacken in einem relativ weiten Bereich zur Anpassung der Bindung an Skischuhe unterschiedlicher Längen einstellbar ist. Dies bedingt seitens des Personals der Leihskistationen einen zeitintensiven Einstell- und Versteilaufwand. Leihskistationen benötigen daher auch gut geschultes Personal.

Hier setzt nun die Erfindung ein, welcher die Aufgabe zu Grunde liegt, eine für ein Leihsystem besonders geeignete Kombination aus Ski mit vormontierten Bindungen und Skischuhen unterschiedlicher Größen zur Verfügung zu stellen, welches einen geringeren Einstell- und Verstellaufwand erfordert und den Kunden sowie dem Personal der Leihstation eine einfache, zeitsparende und übersichtliche Abwicklung gewährleistet.

Gelöst wird die gestellte Aufgabe erfindungsgemäß dadurch, dass zu jedem Skischuhtyp Skischuhe mit mehreren unterschiedlich großen Schalen gleicher Sohlenlänge gehören, wobei jede Schale zum Einsetzen von Innenschuhen in mindestens zwei Schuhgrößen geeignet ist, und dass auf den Ski die Bindungsbacken entsprechend den Sohlenlängen der unterschiedlichen Schuhtypen montiert sind, wobei die Skischuhtypen sowie deren Schalen, die Innenschuhe und die Ski mittels Codes, Markierungen oder dergleichen einander zugeordnet sind.

Erfindungsgemäße Kombinationen sind für Leihstationen optimal geeignet. Die Erfindung erlaubt eine leichte Zuordnung der Schuhe aus den vorgesehenen Skischuhtypen zu den mit den Bindungen versehenen Ski. Es ist keine Anpassung des Bindungsabstandes an den gewählten, dem Kunden passenden Schuh mehr erforderlich. Dies erleichtert dem Personal der Leihstation die Abwicklung und hat für den Kunden vor allem den Vorteil, sehr zeitsparend zu sein.

Unter die Erfindung fällt eine Vielzahl von Kombinationen, von welchen einige besonders vorteilhaft sind. Dabei geht es vor allem auch darum, bei einer guten Übersichtlichkeit möglichst alle gewünschten Skischuhgrößen zur Verfügung stellen zu können. In diesem Zusammenhang ist es von Vorteil, wenn eine erfindungsgemäße Kombination mindestens zwei, insbesondere mindestens drei Skischuhtypen aufweist und zu jedem Skischuhtyp mehrere unterschiedlich große Schalen, die jedoch übereinstimmende Sohlenlängen aufweisen, gehören.

Bei drei oder mehr unterschiedlichen Skischuhtypen ist es von Vorteil, wenn zu jedem Skischuhtyp zwei verschieden große Schalen gehören. In diesem Fall lässt sich die erfindungsgemäße Kombination besondere einfach derart ausführen, dass sämtliche üblicherweise gewünschten Skischuhgrößen zur Verfügung gestellt werden können.

Dazu werden beispielsweise von jeder Schalengröße eines Skischuhtyps mehrere, Insbesondere zwei, Schalen zur Verfügung gestellt, wobei in jede dieser Schalen nur ein Innenschuh einer bestimmten Größe einsetzbar ist. Diese gleich großen Schalen werden insbesondere so ausgeführt, dass in die eine Schale ein Innenschuh einer bestimmten Größe passt und in die andere dieser Schalen ein Innenschuh der nächstfolgenden bzw. benachbarten Größe einsetzbar ist. Es gibt daher Schalen gleicher Größe, die sich in ihrem Innenraum unterscheiden. Dies kann auf einfache Weise dadurch erreicht werden, dass beispielsweise von zwei Schalen gleicher Größe eine durch eine eingelegte Einlage oder dergleichen an einen Innenschuh einer kleineren Größe angepasst ist. Erfindungsgemäße Kombinationen sind daher sehr vielfaltig ausiegbar. Selbstverständlich werden in den Leihstationen Skischuhschalen und Innenschuhs Paarweise in der entsprechenden Anzahl und Größe zur Verfügung gestellt.

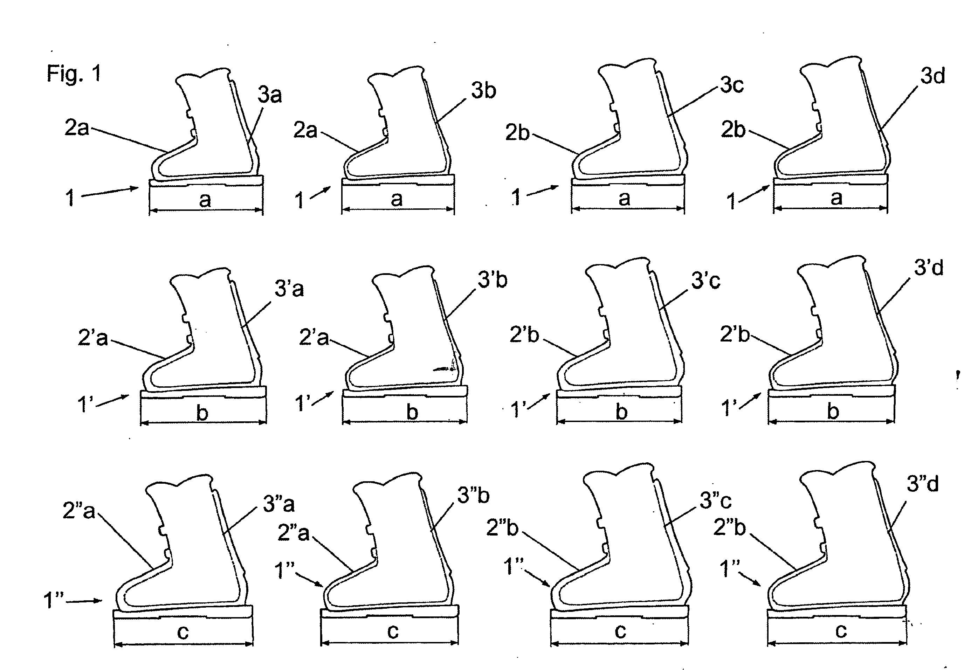

Weitere Merkmale, Vorteile und Einzelheiten der Erfindung werden anhand der Zeichnung, die schematisch ein Ausführungsbeispiel darstellt, näher beschrieben. Dabei zeigen
Fig. 1 zu einer Ausführung einer erfindungsgemäßen Kombination gehörende Skischuhe und
Fig. 2 drei zu einer Ausführung einer erfindungsgemäßen Leihsystems gehörende Ski gleicher Langen.

Wesentliche Bestandteile einer erfindungsgemäßen Kombination aus Skischuhen und Ski für ein Leihsystems zum Alpinskifahren sind mindestens zwei, bei der dargestellten Ausführung drei verschiedene Skischuhtypen 1, 1', 1". Zu einem Skischuhtyp 1, 1', 1" gehören jeweils zwei kleinere äußere Schalen 2a, 2'a. 2"a, und zwei größere äußere Schalen 2b, 2'b, 2"b. Die zu jedem Schuhtyp 1, 1', 1" gehörenden Schalen 2a, 2b und 2'a, 2'b sowie 2"a, 2"b haben jeweils eine übereinstimmende Sohlenlänge a, b, c. Die beiden äußeren Schalen 2a sind zumindest außen gleich groß, insbesondere sind sie übereinstimmend ausgeführt. Dies gilt auch für die weiteren paarweise gleich großen äußeren Schalen 2b, 2'a, 2'b, 2"a, 2"b.

Die beiden gleich großen Schalen 2a des Schuhtyps 1 sind innen derart ausgeführt, dass die eine Schale 2a beispielsweise einen Innenschuh 3a der Größe 23 und die zugehörige Halbgröße, die zweite Schale 2a einen Innenschuh 3b der Größe 24 und die zugehörige Halbgröße aufnehmen kann. Dazu kann in der einen, für den kleineren Innenschuh der Größe 23 vorgesehenen Schale 2a zumindest eine Einlage eingebracht sein, um den Innenraum der Schale 2a an den kleineren Innenschuh anzupassen. Analoges gilt für die beiden äußeren Schalen 2b und die in diese einsetzbaren Innenschuhe 3c, 3d, die beispielsweise den Schuhgrößen 25 und 26 entsprechen.

Die den Innenraum einer Schale verkleinernde und an einen Innenschuh bestimmter Größe anpassende Einlage kann ein- oder mehrteilig sein und wird insbesondere aus Kunststoff gefertigt. Bevorzugt ist ferner eine Ausführung, bei der die Einlage den Zehenbereich des Innenraumes und die an die Sohle anschließenden seitlichen Bereiche der Innenseiten der Schale auskleidet.

Sämtliche zum Skischuhtyp 1' gehörenden äußeren Schalen 2'a und 2'b weisen die Sohlenlänge b auf und sind, wie bereits erwähnt, unterschiedlich groß. In die eine äußere Schale 2'a, welche, wie ebenfalls erwähnt, innen beispielsweise über eine Einlage entsprechend angepasst ist, kann beispielsweise ein Innenschuh 3'a der Schuhgröße 27 und ein solcher der zugehörigen Halbgröße eingesetzt werden, in die zweite äußere Schale 2'a ein Innenschuh 3'b der Größe 28 und der zugehörigen Halbgröße. Analoges gilt für die beiden Schalen 2'b und die in ihnen einsetzbaren Innenschuhe 3'c, 3'd, die den Schuhgrößen 29 und 30 entsprechen können. Auch für die Skischuhe des Schuhtyps 1" gilt Analoges bezüglich der Paare von äußeren Schalen 2"a, 2"b sowie bezüglich der in diese einsetzbaren Innenschuhe 3"a bis 3"d, die den Schuhgrößen 31 bis 34 entsprechen können.

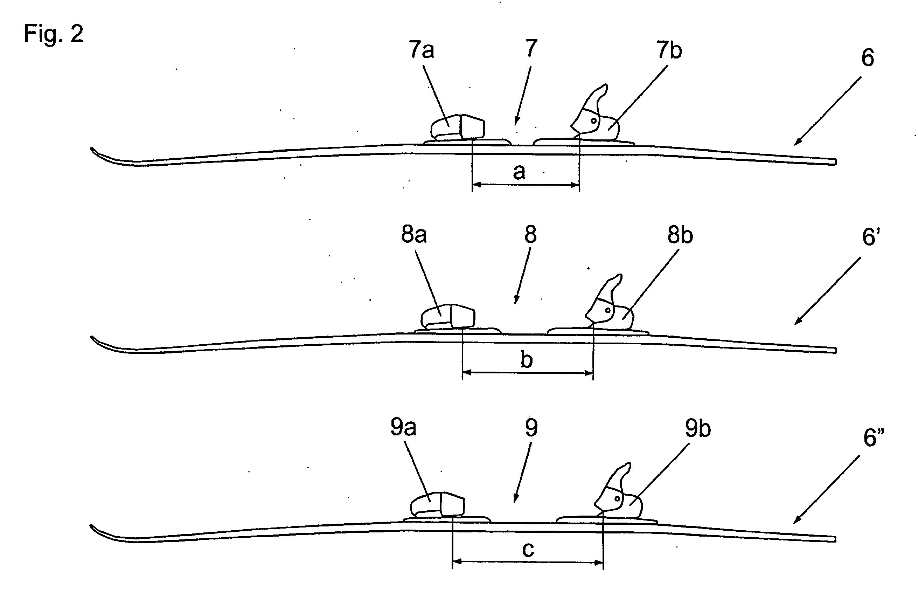

Fig. 2 zeigt drei gleich lange Ski 6, 6', 6", die jeweils zu einem Skipaar gehören, mit montierten Skibindungen 7, 8, 9 bestehend jeweils aus einem Vorderbacken 7a, 8a, 9a und einem Fersenbacken 7b, 8b, 9b. Die beiden am Ski 6 montierten Bindungsbacken 7a, 7b sind bezüglich ihres gegenseitigen Abstandes auf die Sohlenlänge a des Skischuhtyps 1 abgestellt, auf dem Ski 6' sind die beiden Bindungsbacken 8a, 8b entsprechend der Sohlenlänge b des Skischuhtyps 1' und auf dem Ski 6" sind die beiden Bindungsbacken 9a, 9b entsprechend der Sohlenlänge c des Skischuhtyps 1" montiert. Ein Skischuh des Typs 1 ist daher in die Bindung 7, ein Skischuh des Typs 1' in die Bindung 8 und ein Skischuh des Typs 1" in die Bindung 9 ohne weitere Verstellarbeiten einsetzbar.

Es ist somit nicht erforderlich, die Bindungen 7, 8, 9 bezüglich ihres gegenseitigen Abstandes verstellen zu müssen. Es kann daher ein einfaches Schienensystem zur Befestigung der Bindungsbacken am Ski ohne Längsverstellungsmöglichkeit verwendet werden. Mit den gemäß den Schuhtypen in entsprechenden gegenseitigen Abständen montierten Bindungsbacken können Ski unterschiedlicher Längen und Ausführungen vorgesehen werden.

Eine erfindungsgemäße Kombination aus Skischuhen und Ski für Leihsystems weist jeweils mehreren Skipaare 6, 6', 6" und eine entsprechende Anzahl von Skischuhpaaren der Schuhtypen 1, 1', 1" auf und ist komfortabel und einfach zu handhaben. Besonders zeitsparend und komfortabel ist die Handhabung des Leihsystems für das Personal der Leihskistation speziell dann, wenn ein Codierungssystem verwendet wird, welches eine einfache Zuordnung der Schuhe zu den Skipaaren erlaubt. Es eignen sich beispielsweise Codierungssysteme unter Einsatz von Farben, beispielsweise derart, dass ein Skischuhtyp mit roter Markierung in die Bindung eines Skis passt, welcher ebenfalls mit einer roten Markierung versehen ist. Es kann jeder beliebige Code an Ski, Schuhen und Bindungen vorgesehen werden.

Erfindungsgemäße Kombinationen für Leihsysteme umfassen zumindest zwei, vorzugsweise drei, oder auch mehr als drei Skischuhtypen und / oder pro Skischuhtyp mehr als zwei unterschiedlich große Schalen gleicher Sohlenlänge. Erwähnt sei ferner, dass auch unterschiedliche Systeme von Skibindungen im Rahmen eines erfindungsgemäßen Leihsystems verwendbar sind, solange entsprechende Bindungsanschlussbereiche für die Skischuhschalen vorhanden sind.

## Patentansprüche

1. Kombination aus Skischuhen verschiedener Größen und aus Ski mit montierten, einen Vorderbacken und einen Fersenbacken aufweisenden Bindungen, wobei die Skischuhe zu mehreren Skischuhtypen (1,1', 1 ") gehören, wobei jeder Skischuhtyp (1, 1', 1") eine Sohle einer bestimmten Länge (a, b, c) aufweist, die sich von der Sohlenlänge (a, b, c) der anderen Skischuhtypen (1, 1', 1") unterscheidet,
**dadurch gekennzeichnet,**
**dass** zu jedem Skischuhtyp (1, 1', 1") Skischuhe mit mehreren unterschiedlich großen Schalen (2a, 2b; 2'a, 2'b; 2"a, 2"b) gleicher Sohlanlänge (a, b, c) gehören, wobei jede Schale (2a, 2b; 2'a, 2'b; 2"a, 2"b) zum Einsetzen von Innenschuhen (3a bis 3d, 3'a bis 3'd, 3"a bis 3"d) in mindestens zwei Schuhgrößen geeignet ist,
und **dass** auf den Ski (6, 6', 6") die Bindungsbacken (7a, 7b, 8a, 8b, 9a, 9b) entsprechend den Sohlenlängen (a, b, c) der unterschiedlichen Schuhtypen (1, 1', 1") montiert sind, wobei die Skischuhtypen (1, 1', 1") sowie deren Schalen (2a, 2b; 2'a, 2'b; 2"a, 2"b), die Innenschuhe (3a, 3b; 3c, 3d; 3'a, 3'b; 3'c 3'd; 3"a, 3"b; 3"c, 3"d) und die Ski (6, 6'. 6") mittels Codes, Markierungen oder dergleichen einander zugeordnet sind.

2. Kombination nach Anspruch 1, **dadurch gekennzeichnet, dass** sie mindestens zwei, insbesondere mindestens drei Skischuhtypen (1, 1', 1") aufweist.

3. Kombination nach Anspruch 1 oder 2, **dadurch gekennzeichnet, dass** zu jedem Skischuhtyp (1, 1', 1") zwei verschieden große Schalen (2a, 2b; 2'a, 2'b; 2"a, 2"b) gehören.

4. Kombination nach einem der Ansprüche 1 bis 3, **dadurch gekennzeichnet, dass** von jeder Schalengröße mehrere, insbesondere zwei, Schalen (2a, 2b; 2'a, 2'b; 2"a, 2"b) vorhanden sind, die sich innen derart voneinander unterscheiden, dass jeweils ein Innenschuh (3a, 3b; 3c, 3d; 3'a, 3'b; 3'o 3'd; 3"a, 3"b; 3"c, 3"d) einer bestimmten Größe einsetzbar ist.

5. Kombination nach Anspruch 4, **dadurch gekennzeichnet, dass** in die eine Schale (2a, 2b; 2'a, 2'b; 2"a, 2"b) der Schalen gleicher Größe ein Innenschuh (3a, 3b; 3c, 3d; 3'a, 3'b; 3'c 3'd: 3"a, 3"b; 3"c, 3"d) einer bestimmten Größe passt und in die andere Schale ein Innenschuh (3a, 3b; 3c, 3d; 3'a, 3'b; 3'c 3'd; 3"a, 3"b; 3"c, 3"d) der nächsten bzw. benachbarten Größe passt.

6. Kombination nach einem der Ansprüche 1 bis 5, **dadurch gekennzeichnet, dass** zumindest eine der Schalen (2a, 2b; 2'a, 2'b; 2"a, 2"b) gleicher Größe durch eine eingelegte Einlage oder dergleichen an einen Innenschuh (3a, 3b; 3c, 3d; 3'a, 3'b; 3'c 3'd; 3"a, 3"b; 3"c, 3"d) kleinerer Größe angepasst ist.

## Claims

1. A combination of ski boots of various sizes and of skis with mounted bindings having a front cheek and a heel cheek, in which the ski boots belong the several ski boot types (1, 1', 1''), in which each ski boot type (1, 1', 1' ') has a sole of a particular length (a, b, c), which differs from the sole length (a, b, c) of the other ski boot types (1, 1', 1''),
**characterized in that**
ski boots with several shells (2a, 2b; 2'a, 2'b; 2''a, 2''b) of differing size with same sole lengths (a, b, c) belong to each ski boot type (1, 1', 1" ), each shell (2a, 2b; 2'a, 2'b; 2"a, 2"b) being suited for the insertion of inner boots (3a to 3d, 3'a to 3'd, 3" to 3"d) in at least two boot sizes,
and that the binding cheeks (7a, 7b, 8a, 8b, 9a, 9b) are mounted on the skis (6, 6', 6") corresponding to the sole lengths (a, b, c) of the different boot types (1, 1', 1"), in which the ski boot types (1, 1', 1") and their shells (2a, 2b; 2'a, 2'b; 2"a, 2"b), the inner boots (3a, 3b; 3c, 3d; 3'a, 3'b; 3'c, 3'd; 3"a, 3"b; 3''c, 3"d) and the skis (6, 6', 6") are associated with each other by means of codes, markings or suchlike.

2. The combination according to Claim 1, **characterized in that** it has at least two, in particular at least three ski boot types (1, 1', 1").

3. The combination according to Claim 1 or 2, **characterized in that** two shells (2a, 2b; 2'a, 2'b; 2"a, 2''b) of different size belong to each ski boot type (1, 1', 1").

4. The combination according to any of Claims 1 to 3, **characterized in that** several, in particular two, shells (2a, 2b; 2'a, 2'b; 2"a, 2"b)of each shell size are present, which differ from each other internally such that respectively one inner boot (3a, 3b; 3c, 3d; 3'a, 3'b; 3'c, 3'd; 3"a, 3"b; 3"c, 3"d) of a particular size is able to be used.

5. The combination according to Claim 4, **characterized in that** an inner boot (3a, 3b; 3c, 3d; 3'a, 3'b; 3'c, 3'd; 3"a, 3"b; 3"c, 3"d) of a particular size fits into the one shell (2a, 2b; 2'a, 2'b; 2"a, 2"b) of the shells of the same size, and an inner boot (3a, 3b; 3c, 3d; 3'a, 3'b; 3'c, 3'd; 3"a, 3"b; 3"c, 3"d) of the next or adjacent size fits into the other shell.

6. The combination according to any of Claims 1 to 5, **characterized in that** at least one of the shells (2a, 2b; 2'a, 2'b; 2"a, 2"b) of the same size is adapted by an inserted inlay or suchlike to an inner boot (3a, 3b; 3c, 3d; 3'a, 3'b; 3'c, 3'd; 3"a, 3"b; 3"c, 3"d) of a smaller size.

## Revendications

1. Combinaison entre des chaussures de ski de différentes tailles et des skis avec des attaches comportant une mâchoire avant et une mâchoire arriére, les chaussures de ski appartenant à différents types de chaussures de ski (1, 1', 1''), chacun des types de chaussures de ski (1, 1', 1") comportant une semelle d'une certaine longueur (a, b, c) qui se distingue de la longueur de semelle (a, b, c) des autres types de chaussures de ski (1, 1', 1"),
**caractérisée en ce que**
des chaussures de ski avec plusieurs coques de différentes tailles (2a, 2b ; 2'a, 2'b ; 2"a, 2''b) avec les mêmes longueurs (a, b, c) de semelle appartiennent a chaque types de chaussures de ski (1, 1', 1''), chacune des coques (2a, 2b ; 2'a, 2'b ; 2''a, 2''b) étant adaptée à l'insertion de chaussons internes (3a à 3d, 3'a à 3'd, 3"a à 3"d) dans au moins deux pointures de chaussure,
et **en ce que** les mâchoires de liaison (7a, 7b, 8a, 8b, 9a, 9b) sont montées sur les skis (6, 6', 6'') en fonction des longeurs de semelles (a, b, c) des différents types de chaussures de ski (1, 1', 1''), les types de chaussures de ski (1, 1', 1") ainsi que leurs coques (2a, 2b ; 2'a, 2'b ; 2"a, 2"b), les chaussons internes (3a à 3d, 3'a à 3'd, 3"a à 3"d) et les skis (6, 6', 6'') étant attribués les uns aux autres au moyen de codes, de marquages ou autres.

2. Combinaison selon la revendication 1, **caractérisée en ce qu'**elle comporte au moins deux et en particulier au moins trois types de chaussures de ski (1, 1', 1").

3. Combinaison selon la revendication 1 ou 2, **caractérisée en ce que** deux coques (2a, 2b ; 2'a, 2'b ; 2"a, 2"b) de différentes tailles correspondent à chacun des types de chaussures de ski (1, 1', 1").

4. Combinaison selon l'une des revendications 1 à 3, **caractérisée en ce que** plusieurs et en particulier deux coques (2a, 2b ; 2'a, 2'b ; 2" a, 2"b) sont disponibles dans chaque taille de coque, qui se différencient l'une de l'autre de telle façon à l'intérieur, qu'un chausson interne (3a à 3d, 3'a à 3'd, 3"à à 3"d) d'une certaine taille peut être inséré dans chacune d'elles.

5. Combinaison selon la revendication 4, **caractérisée en ce qu'**à l'une des coques (2a, 2b ; 2'a, 2'b ; 2"a, 2"b) parmi les coques de même taille correspond un chausson interne (3a à 3d, 3'a à 3'd, 3"a à 3"d) d'une certaine taille et à l'autre coque correspond un chausson interne (3a à 3d, 3'a à 3'd, 3"a à 3"d) de la taille suivante ou voisine.

6. Combinaison selon l'une des revendications 1 à 5, **caractérisée en ce que** l'au moins une des coques (2a, 2b ; 2'a, 2'b ; 2"a, 2"b) de même taille est adaptée à un chausson interne (3a à 3d, 3'a à 3'd, 3"a à 3"d) de taille inférieure, au moyen d'une semelle intérieure ou autre.
